# EUROPEAN PATENT APPLICATION

(11) **EP 4 654 525 A1**
(43) Date of publication of application: **26.11.2025**
(21) Application number: 23923359.6
(22) Date of filing: 23.02.2023
(51) Int. Cl.: H04L 9/40

(54) **METHOD FOR IMPROVING NETWORK SECURITY, AND ELECTRONIC DEVICE AND READABLE MEDIUM**

(71) Applicant: Siemens Aktiengesellschaft, 80333 München (DE)
(72) Inventor: JIN, Yihong, Suzhou, Jiangsu 215000 (CN); YI, Kai, Nanjing, Jiangsu 210002 (CN); ZHU, Junfeng, Nanjing, Jiangsu 210044 (CN); GAO, Tengfei, Suzhou, Jiangsu 215000 (CN); LIN, Tao, Shanghai 200234 (CN)
(74) Representative: Isarpatent
(86) International application number: PCT/CN2023/077982
(87) International publication number: WO 2024/174182

(57) **Abstract**

Embodiments of this application provide a system for improving cybersecurity, including: a driver in a first space of an operating system, configured to parse a network packet to obtain a first network packet, so that the operating system reads content in the first network packet; a network accelerator in the first space of the operating system, including a data layer and a man-in-the-middle attack tool, where the man-in-the-middle attack tool is configured to filter out malicious packets from the first network packet based on attributes of the first network packet, to obtain a second network packet; a TCP/IP model in the first space of the operating system, configured to parse the second network packet to establish communication with a first application layer in a second space of the operating system; and the first application layer in the second space of the operating system, including a conversion module, where the conversion module is configured to perform data conversion on the second network packet to enable the first application layer.

## Description

### TECHNICAL FIELD

Embodiments of this application mainly relate to the field of cybersecurity, and in particular, to a method, electronic device, and readable medium for improving cybersecurity.

### BACKGROUND

Unauthorized network activities, which often involve network resource theft, almost always endanger cybersecurity. As the world becomes increasingly digital, cybersecurity threats have undoubtedly become a part of our daily lives. In light of the frequent occurrence of cybersecurity vulnerabilities, corporate cybersecurity is particularly crucial. Cybersecurity is not only vital for the normal operation of a corporation, but data leakage also has a negative impact on corporate reputation. Conventional means to ensure cybersecurity include hardware-based detection or purely software-based detection. The hardware-based detection, which relies on strict rules, lacks flexibility and is difficult to configure and redefine, while the purely software-based detection is sometimes limited by resources.

### SUMMARY

Embodiments of this application provide a method, electronic device, and readable medium for improving cybersecurity to quickly and effectively control the cybersecurity of applications in a first device during operation and further save computing resources in the process of processing network packets.

In a first aspect, a system for improving cybersecurity is provided, including: a network card, configured to receive a network packet sent by a controller for controlling the operation of a first device, and send the network packet to a driver in a first space of an operating system; the driver in the first space of the operating system, configured to parse the network packet to obtain a first network packet, so that the operating system reads content in the first network packet; a network accelerator in the first space of the operating system, including a data layer and a man-in-the-middle attack tool, where the data layer is configured to parse attributes of the first network packet, and the man-in-the-middle attack tool is configured to filter out malicious packets from the first network packet based on the attributes of the first network packet, to obtain a second network packet; a TCP/IP model in the first space of the operating system, configured to parse the second network packet to establish communication with a first application layer in a second space of the operating system; and the first application layer in the second space of the operating system, including a conversion module, where the conversion module is configured to perform data conversion on the second network packet to enable the first application layer.

In a second aspect, a method for improving cybersecurity is provided, including: parsing a network packet to obtain a first network packet, so that an operating system reads content in the first network packet, where the network packet includes a network packet sent by a controller for controlling the operation of a first device; parsing attributes of the first network packet; filtering out malicious packets from the first network packet based on the attributes of the first network packet, to obtain a second network packet; parsing the second network packet to establish communication with a first application layer in a second space of the operating system; and performing data conversion on the second network packet to enable the first application layer.

In a third aspect, an electronic device is provided, including: at least one memory, configured to store computer-readable code; and at least one processor, configured to call the computer-readable code to perform each step in the method provided in the second aspect.

In a fourth aspect, a computer-readable medium is provided, where the computer-readable medium has computer-readable instructions stored therein, and the computer-readable instructions, when executed by a processor, enable the processor to perform each step in the method provided in the second aspect.

### BRIEF DESCRIPTION OF THE DRAWINGS

The following accompanying drawings are merely intended to provide illustrative descriptions and explanations of embodiments of this application and do not limit the scope of the embodiments of this application. In the figures:
FIG. 1 is a schematic diagram of a system for improving cybersecurity according to an embodiment of this application;
FIG. 2 is a flowchart of a method for improving cybersecurity according to an embodiment of this application; and
FIG. 3 is a schematic diagram of an electronic device according to an embodiment of this application.

Explanation of reference numerals:

| | | |
|---|---|---|
| 100: System for improving cybersecurity | 110: Network card | 120: First space of an operating system |
| 121: Driver | 122: Network accelerator | 123: TCP/IP model |
| 130: Second space of the operating system | 131: First application layer | 200: Method for improving cybersecurity |
| 201-205: Steps of the method | 300: Electronic device | 301: Memory |
| 302: Processor | | |

### DETAILED DESCRIPTION

The subject matter described herein will be discussed with reference to exemplary embodiments. The discussion of these embodiments is merely to enable a person skilled in the art to better understand and thereby implement the subject matter described herein, and is not a limitation on the scope of protection, applicability, or examples set forth in claims. Functions and arrangements of elements under discussion may be changed without departing from the scope of protection of the embodiments of this application. Various processes or components may be omitted, replaced, or added in each example as needed. For example, the described method may be executed in a different order from the described one, and each step may be added, omitted, or combined. In addition, features described in some examples may also be combined in others.

As used herein, the term "include" and variations thereof represent open terms, meaning "including but not limited to". The term "based on" represents "based at least partially on". The terms "one embodiment" and "an embodiment" represents "at least one embodiment". The term "another embodiment" represents "at least one other embodiment". The terms such as "first" and "second" may refer to different objects or the same object. The following may include other definitions, whether explicit or implicit. Unless explicitly specified in the context, the definition of a term remains consistent throughout the description.

The embodiments of this application will be described in detail below in conjunction with the accompanying drawings.

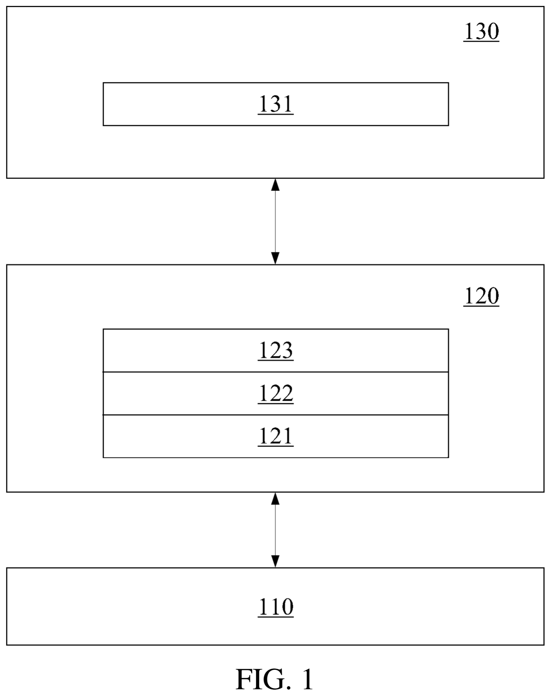

FIG. 1 is a schematic diagram of a system 100 for improving cybersecurity according to an embodiment of this application. As shown in FIG. 1, system 100 for improving cybersecurity includes:
a network card 110, configured to: receive a network packet sent by a controller for controlling the operation of a first device, and send the network packet to a driver 121 in a first space 120 of an operating system;
the driver 121 in the first space 120 of the operating system, configured to: parse the network packet to obtain a first network packet, so that the operating system reads content in the first network packet;
a network accelerator 122 in the first space 120 of the operating system, including a data layer and a man-in-the-middle attack tool, where the data layer is configured to parse attributes of the first network packet, and
the man-in-the-middle attack tool is configured to filter out malicious packets from the first network packet based on the attributes of the first network packet, to obtain a second network packet;
a TCP/IP model 123 in the first space 120 of the operating system, configured to parse the second network packet to establish communication with a first application layer in a second space of the operating system; and
the first application layer 131 in the second space 130 of the operating system, including a conversion module, the conversion module being configured to: perform data conversion on the second network packet to enable the first application layer 131.

Optionally, the network accelerator 122 may be selected from one of the following: eBPF, XDP, or DPDK.

Optionally, the first space 120 of the operating system is a core space, and the second space 130 of the operating system is a user space. Optionally, the operating system may be a Linux operating system.

Optionally, the attributes of the first network packet include at least one of the following: length, type, or status.

In an embodiment, the man-in-the-middle attack tool filters out malicious packets from the first network packet in the following way:
Step 1: Determine whether a current network packet comes from a same host as a previous network packet; if the current network packet comes from the same host, perform step 2; or if the current network packet comes from a different host, add a unique (unique) identifier to the current network packet, and then perform step 2.
Step 2: Determine whether a destination address of the current network packet is the same as a source address saved last time; if the destination address is the same as the source address saved last time, perform step 3; or if the destination address is different from the source address saved last time, determine the current network packet as a normal packet.
Step 3: Determine whether a source address of the current network packet is the same as the source address saved last time; if the source address is the same as the source address saved last time, perform step 4; or if the source address is different from the source address saved last time, determine the current network packet as a normal packet.
Step 4: Determine whether the source address of the current network packet is the same as a destination address saved last time; if the source address is the same as the destination address saved last time, determine the current network packet as a malicious packet to be filtered out by the man-in-the-middle attack tool; or if the source address is different from the destination address saved last time, determine the current network packet as a normal packet.
Step 5: Save the source address and destination address of the current network packet determined as the normal packet.

In an embodiment, the first application layer 131 in the second space 130 of the operating system further includes a control layer, the control layer being configured to: receive a control command from a user side; and send the control command to the data layer of the network accelerator 122 in the first space 120 of the operating system, so that the data layer performs data cleaning on the second network packet based on the corresponding control command. Optionally, the data cleaning refers to removing redundant data or removing all data related to an IP address specified by a user. Through the data cleaning, the volume of data that needs to be computed during processing can be reduced, thereby further saving computing resources and simultaneously improving processing speed.

In an embodiment, the first application layer 131 in the second space 130 of the operating system further includes a control layer, the control layer being configured to: receive a control command from a user side; determine whether computing resources of the data layer of the network accelerator 122 in the first space 120 of the operating system satisfy the corresponding control command; when the computing resources of the data layer satisfy the corresponding control command, send the corresponding control command to the data layer, so that the data layer performs data cleaning on the second network packet based on the corresponding control command; and when the computing resources of the data layer fail to satisfy the corresponding control command, perform data cleaning on the second network packet based on the corresponding control command. Optionally, in cases where the computing resources of the data layer fail to satisfy the corresponding control command, for example, scenario one: within a preset time period such as 60 seconds, when the control layer detects that relevant ICMP packets in the second network packet are greater than a preset threshold, the control layer performs data cleaning on the second network packet based on the control command sent by the user side; and scenario two: when the control layer detects that relevant TCP serial numbers in the second network packet have been disordered, the control layer determines that there is an identity spoofing attack and performs data cleaning on the second network packet.

In an embodiment, the control layer is further configured to collect logs of communication between the control layer and the data layer. In addition, both the control layer and the data layer have a function of forwarding data.

The system for improving cybersecurity, disclosed in this embodiment, is a system combining software and hardware. By placing the network accelerator 122 in the first space 120 of the operating system in front of the TCP/IP model for parsing network packets, the volume of data that the TCP/IP model needs to process can be greatly reduced. Moreover, the network accelerator is configured to include the data layer and the man-in-the-middle attack tool, the combination of which can effectively and quickly filter out malicious packets from the network packet sent by the controller for controlling the operation of the first device, thereby ensuring that the network packet entering the TCP/IP model is secure network packet. Ultimately, the cybersecurity of applications in the first device is quickly and effectively controlled.

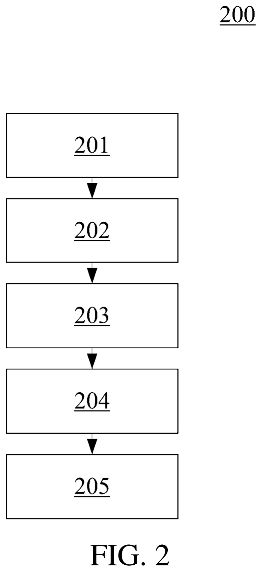

FIG. 2 is a flowchart of a method for improving cybersecurity according to an embodiment of this application. As shown in FIG. 2, the method 200 for improving cybersecurity includes:
Step 201: Parse a network packet to obtain a first network packet, so that an operating system reads content in the first network packet, where the network packet includes a network packet sent by a controller for controlling the operation of a first device.
Step 202: Parse attributes of the first network packet.
Step 203: Filter out malicious network packets from the first network packet based on the attributes of the first network packet, to obtain a second network packet.
Step 204: Parse the second network packet to establish communication with a first application layer in a second space of the operating system.
Step 205: Perform data conversion on the second network packet to enable the first application layer. Accordingly, the operation of the first device is securely controlled through the first application layer.

In an embodiment, before step 204, a control command may be received from a user side; and data cleaning is performed on the second network packet based on the control command.

In an embodiment, before step 204, a control command may be received from a user side; whether computing resources of a data layer satisfy the control command is determined; when the computing resources of the data layer satisfy the control command, the control command is sent to the data layer, so that the data layer performs data cleaning on the second network packet based on the control command; and when the computing resources of the data layer fail to satisfy the control command, after step 205, the control layer performs data cleaning on the second network packet based on the control command.

The method for improving cybersecurity, disclosed by the embodiments of this application, can quickly and effectively control the cybersecurity of applications in the first device during operation.

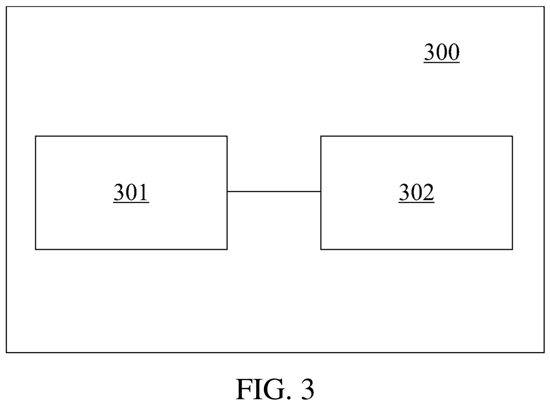

An embodiment of this application further provides an electronic device 300. FIG. 3 is a schematic diagram of an electronic device 300 according to an embodiment of this application. As shown in FIG. 3, the electronic device 300 includes a memory 301 and a processor 302, the memory 301 storing computer-readable code, where the computer-readable code is executed by the processor 302 to implement the method 200 as described above.

The at least one processor 302 may include a microprocessor, an application-specific integrated circuit (ASIC), a digital signal processor (DSP), a central processing unit (CPU), a graphics processing unit (GPU), a state machine, or the like. Examples of computer-readable media include, but are not limited to, a floppy disk, a CD-ROM, a magnetic disk, a memory chip, an ROM, an RAM, an ASIC, a configured processor, an all-optical medium, all magnetic tapes or other magnetic media, or any other media from which a computer processor may read instructions. In addition, various other forms of computer-readable media may send instructions to a computer or carry instructions, including a router, a private or public network, or other wired and wireless transmission devices or channels. The instructions may include code in any computer programming language, including C, C++, C language, Visual Basic, java, and JavaScript.

Moreover, an embodiment of this application further provides a computer-readable medium, the computer-readable medium having computer-readable instructions stored therein, and the computer-readable instructions, when executed by a processor, enabling the processor to perform the method 200 as described above. Examples of the computer-readable medium include a floppy disk, a hard disk, a magneto-optical disk, an optical disk (such as CD-ROM, CD-R, CD-RW, DVD-ROM, DVD-RAM, DVD-RW, DVD+RW), a magnetic tape, a nonvolatile memory card, and an ROM. Optionally, the computer-readable instructions may be downloaded from a server computer or a cloud via a communication network.

Not all the steps and modules in the foregoing processes and system structure diagrams are necessary. Some steps or modules may be ignored according to actual needs. The execution sequence of each step is not fixed, but may be adjusted as needed. The system structure described in each of the foregoing embodiments may be either a physical structure or a logical structure, that is, some modules may be implemented by the same physical entity, or some modules may be implemented by a plurality of physical entities, or some modules may be jointly implemented by some components in a plurality of independent devices.

## Claims

1. A system for improving cybersecurity, comprising:
- a network card (110), configured to:
- receive a network packet sent by a controller for controlling the operation of a first device; and
- send the network packet to a driver (121) in a first space (120) of an operating system;
- the driver (121) in the first space (120) of the operating system, configured to:
- parse the network packet to obtain a first network packet, so that the operating system reads content in the first network packet;
- a network accelerator (122) in the first space (120) of the operating system, comprising a data layer and a man-in-the-middle attack tool,
- the data layer being configured to:
- parse attributes of the first network packet, and
- the man-in-the-middle attack tool being configured to:
- filter out malicious packets from the first network packet based on the attributes of the first network packet, to obtain a second network packet;
- a TCP/IP model (123) in the first space (120) of the operating system, configured to:
- parse the second network packet to establish communication with a first application layer in a second space of the operating system; and
- the first application layer (131) in the second space (130) of the operating system, comprising a conversion module, the conversion module being configured to:
- perform data conversion on the second network packet to enable the first application layer (131).

2. The system according to claim 1, wherein the first application layer (131) in the second space (130) of the operating system further comprises a control layer, the control layer being configured to:
- receive a control command from a user side; and
- send the control command to the data layer of the network accelerator (122) in the first space (120) of the operating system, so that the data layer performs data cleaning on the second network packet based on the control command.

3. The system according to claim 1, wherein the first application layer (131) in the second space (130) of the operating system further comprises a control layer, the control layer being configured to:
- receive a control command from a user side;
- determine whether computing resources of the data layer of the network accelerator (122) in the first space (120) of the operating system satisfy the control command;
- when the computing resources of the data layer satisfy the control command, send the control command to the data layer, so that the data layer performs data cleaning on the second network packet based on the control command; and
- when the computing resources of the data layer fail to satisfy the control command, perform data cleaning on the second network packet based on the control command.

4. The system according to claim 1, wherein
- the first space (120) of the operating system is a core space, and the second space (130) of the operating system is a user space.

5. The system according to claim 1, wherein the attributes of the first network packet comprise at least one of the following:
- length, type, or status.

6. A method for improving cybersecurity, comprising:
- parsing (201) a network packet to obtain a first network packet, so that an operating system reads content in the first network packet, the network packet comprising a network packet sent by a controller for controlling the operation of a first device;
- parsing (202) attributes of the first network packet;
- filtering out (203) malicious packets from the first network packet based on the attributes of the first network packet, to obtain a second network packet;
- parsing (204) the second network packet to establish communication with a first application layer in a second space of the operating system; and
- performing data conversion (205) on the second network packet to enable the first application layer.

7. The method according to claim 1, wherein before the parsing (204) the second network packet, the method further comprises:
- receiving a control command from a user side; and
- performing data cleaning on the second network packet based on the control command.

8. The method according to claim 1, wherein before the parsing (204) the second network packet, the method further comprises:
- receiving a control command from a user side;
- determining whether computing resources of a data layer satisfy the control command;
- when the computing resources of the data layer satisfy the control command, sending the control command to the data layer, so that the data layer performs data cleaning on the second network packet based on the control command; and
- when the computing resources of the data layer fail to satisfy the control command, after the performing data conversion (205) on the second network packet, performing, by the control layer, data cleaning on the second network packet based on the control command.

9. An electronic device, comprising:
at least one memory (301), configured to store computer-readable code; and
at least one processor (302), configured to call the computer-readable code to perform the steps in the method according to any one of claims 6 to 8.

10. A computer-readable medium, wherein the computer-readable medium has computer-readable instructions stored therein, and the computer-readable instructions, when executed by a processor, enable the processor to perform the steps in the method according to any one of claims 6 to 8.
